# EUROPEAN PATENT SPECIFICATION

(11) **EP 1 425 094 B1**
(45) Date of publication and mention of the grant of the patent: **04.05.2005**
(21) Application number: 02764720.5
(22) Date of filing: 18.07.2002
(51) Int. Cl.: B01J 20/26

(54) **HYDROABSORBENT PRODUCT**
WASSERABSORBIERENDER ARTIKEL
PRODUIT HYDROABSORBANT

(30) Priority: 18.07.2001 IT MI20011526
(43) Date of publication of application: 09.06.2004
(73) Proprietor: EOS S.R.L., I-20049 Concorezzo (IT)
(72) Inventor: FURLAN, Giuseppe, I-20049 Concorezzo (IT)
(74) Representative: Gervasi, Gemma, Dr.
(86) International application number: PCT/EP2002/008004
(87) International publication number: WO 2003/008093

(56) References cited:
- EP-A- 0 829 245
- WO-A-01/44576
- GB-A- 2 251 206
- PATENT ABSTRACTS OF JAPAN vol. 011, no. 356 (M-644), 20 November 1987 (1987-11-20) & JP 62 133204 A (NIPPON KOKAN KK ;OTHERS: 01), 16 June 1987 (1987-06-16)
- DATABASE WPI Section Ch, Week 200025 Derwent Publications Ltd., London, GB; Class A92, AN 1999-311421 XP002225164 & SE 512 624 C (LARSSON A A), 10 April 2000 (2000-04-10)

## Description

### FIELD OF THE INVENTION

The present invention relates to a hydroabsorbent product in the shape of a wrapping. In particular, it relates to a product able to absorb mostly watery liquids, swelling out so as to create a barrier to the propagation of the liquids.

### PRIOR TECHNIQUE

As known in the art, there are materials able to absorb water forming insoluble gels; an important characteristic of these materials is their high ability to retain the absorbed liquid even when they are exposed to pressure. These are special types of polymeric materials, known as "superabsorbent polymers", normally used under the form of granular solid. Some of these polymers can absorb water masses up to more than 150 times their weight. Some examples of these superabsorbent polymers are the reticular polymer salts of the acrylic acid, or their derivatives and respective copolymers (for example with acrylamide or starch).

A typical use of these types of granular solids is in absorbent products, like for example napkins, so as to improve the product's ability to trap liquids. Usually these materials are used in combination with other fibrous absorbent materials, like for example cellulose, having the aim to guarantee the permeability of the absorbent mass to liquids. Due to the insolubility of the gels formed by the above mentioned polymeric materials, in fact, high concentrations of absorbent granules can cause the creation, after the absorption of certain quantities of liquid, of portions having some impermeability: this would hinder a constant and fast distribution of liquids in the remaining part of the absorbent mass, so lowering the overall effectiveness of the product.

When it is necessary to absorb or retain high quantities of liquids, as can happen in emergencies like floods or breakage of pipings, it is desirable to have ready-made absorbent products, even of significant size, with a high absorption capacity per volume and mass units; easy to store, transport and, after use, to remove. It is moreover necessary that these products constitute an effective barrier to the liquids' propagation, even after their absorbent capacity is exhausted.

In cases like the one mentioned above usually sand bags are used. The problems associated to this solution are clear, due to the significant density of the material used, even when dry, and to its limited absorption capacity. Moreover, sand mass is permeable to liquids and therefore, to obtain a satisfying containment effect even once the absorption capacity is ended, it is necessary to have a product with a remarkable thickness. At last, the sand's ability to retain the absorbed liquid is limited: this is mostly released due to gravity and this, moreover, can cause problems when the bags are to be removed.

It is therefore desirable to use materials like the above mentioned superabsorbent polymers, exploiting to the full their absorption characteristics and their impermeability once their absorption capacity is exhausted, so as to create a barrier to the liquid's propagation.

A problem associated to the use of these materials arises from their significant increase in volume resulting from the absorption of liquids. For this reason, the absorbent product should contain the superabsorbent material once this is dilated, and should not act as an impediment to its expansion up to a level corresponding to a suitable absorption, so as to avoid the breaking of the same product. On the other hand, before use the superabsorbent material has a very reduced volume, so that it is difficult to have an uniform distribution inside an absorbent product based on this same material. This last characteristic is remarkably relevant: first of all, to have an ideal exploitation of all the polymer contained in the product, because if the polymer was concentrated in big quantities in a small area, the material that first absorbed liquids could act as a barrier to the liquid's propagation in the rest of the material (due to the above mentioned characteristics); moreover, it is desirable that the whole volume of the absorbent product could immediately absorb and contain the liquid.

The use of other absorbent materials to disperse the superabsorbent polymer's granules would not bring to satisfying results. In fact, the insertion of materials having reduced absorbent capacities compared with the superabsorbent material would reduce the overall massy and voluminal absorbent capacity of the product.

Moreover, the permeability that these materials have also when soaked would reduce the containment effectiveness of the product; at last, the liquid absorbed would be easily discharged due to gravity or pressure.

The Applicant has developed a new idea for an absorbent product able to satisfy adequately the needs reported above.

### SUMMARY OF THE INVENTION

The present invention relates thus to an absorbent product comprising an external wrapping permeable to water. This product is characterised by the fact that the said external wrapping contains an internal wrapping comprising at least one material basically having no resistance if wet; the said internal wrapping contains a superabsorbent polymer in granules.

### DETAILED DESCRIPTION OF THE INVENTION

The material composing the said external wrapping is chosen ideally so as to combine the best permeability with a suitable resistance. Non-woven fabrics can be favourably used, ideally so as to allow to close the wrapping through appropriate techniques like for example sewing, heat-seal, ultrasonic welding. Heat-sealable materials are especially favoured, as for example those in polypropylene fibres. The weight of these non-woven fabrics can be favourably chosen between 20 and 100 g/m²; this represents a good compromise between permeability and resistance needs. An example of a material specially suitable for manufacturing this external wrapping is the "100% permeable polypropylene", by BBA NonWovens Fabric, having a weight of 50 g/m².

Ideally, the internal wrapping is wholly made up of a material basically having no resistance if wet.

This material should be basically free of resistance once it touches water: this means that it is able to disintegrate, dissolve, or anyway easily break, so that in no way it acts as a barrier to the expansion of the superabsorbent polymer contained in the said internal wrapping. Ideally this material disintegrates or dissolves when moistened. If it has a high permeability it is better. When dry, the internal wrapping's material should conversely have a minimum of resistance, so as to guarantee its workability and portability. According to one specially favourite aspect of the invention, a heat-sealable material is used. This material ideally has a weight between 40 and 120 g/m², preferably between 50 and 120 g/m². According to one favourite aspect of the invention, a blotting paper is used, having a minimum content in cellulose fibres and a very low size content; a residual humidity between 1 and 20% in weight, if possible not higher than 7%, and a thickness between 90 and 170 µm, and tension resistance, obviously when dry, between 0.3 and 1.5 kN/m.

Just by way of illustration, we perfunctorily describe here a possible way for manufacturing a blotting paper having the above mentioned characteristics. Low quality paper to be pulped (with low cellulose content, present only as not homogeneous and very short fibres) is pulped in wet conditions with suitable millstones, until you obtain a pulp; this is spread on a felt tape and beaten, and at the same time is aspirated from the tape's lower part so as to take away the water released by the pulp. When the material is dry and has an adequately uniform thickness, you remove a first sheet from the felt tape: this is run between two hot rolls, so as to give it its final thickness and complete its desiccation. This material can be wrapped up in rolls. It is better not to add sizes during its preparation: the size residues already present in the paper to be pulped used should give enough resistance to the material so obtained, also in view of heat-sealing, without compromising its ability to disintegrate once touched by water. An expert in this technique can easily optimize the process parameters so as to regulate according to need the properties of the material so obtained; as well as obtaining materials having the above mentioned characteristics in another way.

According to another possible aspect of the invention, to manufacture the said internal wrapping it is possible to use a water-soluble material. An example is given by an organic material similar to a flimsy paper, having a weight between 30 and 100 g/m², available under the trading name of "Hydrolene" and manufactured by Idroplast (Altopascio ― LU - Italy). When a similar material is used, during the manufacturing phases it is necessary to keep the environment at a very low humidity, due to the extreme hygroscopicity of this material.

The internal wrapping has the aim of maintaining the superabsorbent polymer suitably distributed inside the external wrapping until the product is used. Having virtually no resistance when whet, the internal wrapping will disintegrate, if not for being simply in contact with water, for the action of the polymer contained in it, when this swells: and will leave the polymer free to fill the external wrapping, that will have a suitable capaciousness.

According to one favourite aspect of the invention, the internal wrapping can comprise two sheets of the said material having virtually no resistance when wet, ideally of blotting paper having the above mentioned properties, suitably united along their margins, ideally through heat-seal. Even more preferably, the two sheets are united in other points so as to form many cells that hold the superabsorbent polymer. Ideally the cells are closed, that is do not communicate between one another. The internal wrapping will therefore have the look of a "cells sheet", each cell being obtained between the two sheets constituting the said internal wrapping.

The sheets may be joined together in different ways. Heat-sealing is preferred because it allows to employ reduced amounts of size than gluing, in order to affect less the property of the sheet of disintegrating when contacted with water. The sheets are preferably prepared for heat-sealing with an adequate amount of a size suitable for this application.

The polymer can be distributed in the cells in variable quantity, according to need; ideally all the cells have basically the same size and hold similar quantities of polymer.

The cells can have various shapes and sizes, according to the properties desired for the product and its manufacturing needs. According to one aspect of the invention, the cells can have a square or rectangular shape; their size is favourably rather small, so as to improve the polymer's distribution, consistently with the effortlessness of the manufacturing process. We saw that the suitable cells have such a size that in the "cells sheet" structure of the internal wrapping there are between 250 and 2000 cells per m², preferably between 250 and 1000 cells per m², and more preferably between 300 and 500 cells per m².

According to one further aspect of the invention, the filling of the cells is chosen so as to balance an optimum exploitation of all the superabsorbent polymer and the ability of the swollen polymer to act as a barrier to the passing of liquids.

The absorbent product according to the present invention can have the most miscellaneous collection of shapes and sizes, according to the needs to be met.

According to one favourite aspect of the invention, the absorbent products can have the shape of pillows, obtained sealing together at their margins two sheets, having equal shape and size, and made of the material composing the external wrapping. Ideally these pillows have a rectangular shape, that is are obtained by two sheets of the material composing the external wrapping, having a rectangular shape. Between these two sheets the internal wrapping will be placed, that holds the polymer. Just by way of illustration a similar product could have a size of 50 x 80 cm, or, even preferably of 50 x 70 cm.

As mentioned above, the internal wrapping will be ideally composed by two blotting paper sheets sealed together so as to make a "sheet of cells" structure. This structure can suitably have a shape similar to the one of the absorbent product, so as to distribute the polymer in all the space between the two sheets in permeable material composing the external wrapping. More than one structure overlapping one another can be used; however, it is better to use only one structure per absorbent product. This allows to optimize the exploitation of the polymer and the liquid containment properties of the product, and to manufacture this same product with the minimum possible quantity of materials different from the superabsorbent polymer.

The external wrapping has chiefly the function of containing the swollen polymer. The volume available in the external wrapping should be so big as to allow an expansion of the polymer equal to a suitable liquid absorption. When the said external wrapping has the shape of a pillow composed by two sheets of the external wrapping united together along the margins, the suitable values of the said volume could be favourably between 30 and 150 l per m² of side surface of the absorbent product, a suitable value being 125, where with side surface we mean the surface of one of the two sheets composing the external wrapping. Lower values may be chosen for applications wherein a large swelling is not advised. More preferably, this volume is of at least 40 l/m², better still at least 70 l/m².

The superabsorbent polymer in granules can be easily chosen according to it use. We prefer reticular polyacrylic acid salts, like reticular sodium polyacrylate. As regards their effectiveness, we prefer polymers able to absorb at least 10 times their weight in water, more preferable are those that absorb at least 50 times their weight in water, even more preferably they should be able to absorb more than 100 times their weight in water. A specially preferred product is available with the trading name of FAVOR-PAC 230, manufactured by Stockhausen, having a granulometry from 100 to 860 µm.

It is preferable that the absorbent products of the present invention contain between 0.2 and 2 kg, more preferably between 0.3 and 0.7 kg in polymers per m² of side surface as above defined.

A parameter that could be important to evaluate is the weight of the product once swollen. It could be useful to have a weight that could act so that the friction of the product with the ground prevents the dragging of this same product by the liquid you wish to hold back. In fact, the absorbent products according to the present invention are specially indicated to be used in case of spilling of great quantities of liquid, as in the case of floods or spilling of liquid from pipings or plants. It could also be beneficial to have a means for uniting two or more products together, so as to obtain suitably sized absorbent and containment structures; for example, a series of male and female button holes, suitably alternated, could be applied along the product's margins.

The said products can also be fixed to rigid structures or included into cage structures, that can be used in the containment of considerable liquid flows.

Moreover, it is easy to regulate the polymer content per volume or surface unit, as well as choose suitable sizes, so as to satisfy also other kinds of needs, like domestic or health uses; this confers to this invention a great flexibility of use.

The absorbent products according to the present invention can be easily removed after their use, without losing the liquid absorbed. They can be disposed of, thanks to a suitable choice in the materials composing them, as regular waste (except for the case in which they absorbed specific polluting substances).

They can also be dried, for example leaving them in the light. In this case the polymer releases the water it absorbed under gaseous form, becoming lighter. This can be useful to carry the products used and for their disposal (the superabsorbent polymers can usually be burned down).

Usually the polymers of the type here used, once used, will lose their absorbent properties, even after having released the water absorbed in the way indicated above. For this reason it will be possible to use again the absorbent products according to the invention only if these absorbed liquids only for a part of their overall capacity.

Due to their nature, the products according to the invention should be protected from humidity until their use: otherwise the polymer would absorb the humidity, so compromising the product's absorbent properties, and this could bring to the disintegration of the internal wrapping. A suitable system is to store the products in sealed wrappings made with impermeable materials.

Just by way of illustration, we report that the internal wrapping in cells could be manufactured with machinery similar to the one used to manufacture powder products in sachets made of paper or other heat-sealable materials; machinery that create a continuous sheet with cells structure, that is then cut in sachets. Instead of cutting it, this sheet can then be placed between two sheets of the material composing the external wrapping of the product according to the invention, continuously unreeled by rolls. The multiple-layers "band" so obtained is heat-sealed along its margins and, at the same time, heat-sealed and cut sideways at regular intervals, so as to obtain rectangular products in the desired sizes. The necessary changes to the machinery used can be easily found by the technicians in the field.

It should be noted that, operating in the above mentioned way, the internal wrapping is sealed by all its four sides to the external one. This characteristic, due to the need of simplifying the manufacturing process, can be favourable to keep the polymer in the desired position. However, as a rule, the fact that the internal wrapping is fixed to the external one does not represent a prerequisite. In fact, it has been found that it may be advantageous to prepare the internal wrapping on a separate machine and cut it into sheets of the required size to be placed into the external wrapping. The sheets of the latter may be then heat-sealed, or, preferably, sewed together, without being necessarily joined with the internal wrapping. This may be preferred when the temperature required for heat-sealing is different for the materials of the internal and of the external wrapping.

## Claims

1. Absorbent product comprising an external wrapping permeable to water, this product being **characterized by** the fact that the said external wrapping contains an internal wrapping comprising at least one material capable of disintegrating, dissolving or anyway easily breaking when in contact with water such internal wrapping comprising two sheets united between them in order to form cells holding a super-absorbent polymer in granules.

2. Product according to claim 1 in which the external wrapping is manufactured with a non-woven fabric having a weight between 20 and 100 g/m².

3. Product according to claim 2 in which the said material is polypropylene.

4. Product according any of the previous claims in which the said superabsorbent polymer is able to absorb water over 10 times its weight.

5. Product according to claim 4 in which the said superabsorbent polymer is able to absorb water over 100 times its weight.

6. Product according to claim 4 or 5 in which the said superabsorbent polymer is a sodium salt of reticular polyacrylic acid, having a granulometry between 100 and 860 µm.

7. Product according to any of the previous claims in which the said internal wrapping is composed by blotting paper having a weight between 40 and 120 g/m².

8. Product according to claim 7 in which the said blotting paper is heat-sealable.

9. Product according to claim 7 or 8 in which the said blotting paper has a residual humidity between 1 and 20% in weight, thickness between 90 and 170 µm, and a tension resistance when dry between 0.3 and 1.5 kN/m.

10. Product according to claim 9 in which the said blotting paper has a residual humidity not higher than 7% in weight.

11. Product according to any of the claims from 7 to 10, in which the said blotting paper is obtained from paper pulped and spread in sheets.

12. Product according to any of the claims from 1 to 6 in which the said internal wrapping is composed by a heat-sealable and water soluble material.

13. Product according to any of the previous claims, in which the said cells are closed cells.

14. Product according to the claim 13, in which the said internal wrapping is composed by two sheets of the said material, basically having no resistance if wet, heat-sealed so as to have many cells, each of whom obtained between the two said sheets.

15. Product according to claim 14, in which the said internal wrapping presents between 250 and 1000 cells per m².

16. Product according to claim 15, in which the said internal wrapping presents between 300 and 500 cells per m².

17. Product according any of the previous claims having the shape of a rectangular pillow, obtained with two sheets of material composing the external wrapping united between them along the margins.

18. Product according to claim 17, in which the polymer is present in quantities between 0.2 and 2 kg/m².

19. Product according to claim 18, in which the polymer is present in quantities between 0.3 and 0.7 kg/m^{2.}

20. Product according to any of the claims from 17 to 19, in which the volume available in the external wrapping is between 30 and 150 l/m² of side surface, preferably higher than 40 l/m².

## Patentansprüche

1. Absorbierender Artikel, welcher eine äußere, für Wasser durchlässige Hülle umfasst, **dadurch gekennzeichnet, dass** die genannte äußere Hülle eine innere Hülle enthält, welche mindestens ein Material umfasst, das fähig ist, sich zu zersetzen, sich aufzulösen oder jedenfalls leicht auseinander zu brechen, wenn es mit Wasser in Berührung kommt, wobei derartige innere Hülle zwei Bögen umfasst, welche miteinander verbunden sind, um Zellen zu bilden, welche ein stark absorbierendes Polymer in Form von Granulat enthalten.

2. Artikel gemäß Anspruch 1, bei welchem die äußere Hülle aus einem Vliesstoff mit einem Gewicht zwischen 20 g/m² und 100 g/m² hergestellt ist.

3. Artikel gemäß Anspruch 2, bei welchem das genannte Material Polypropylen ist.

4. Artikel gemäß einem der vorherigen Ansprüche, bei welchem das genannte stark absorbierende Polymer fähig ist, über das Zehnfache seines Gewichtes an Wasser zu absorbieren.

5. Artikel gemäß Anspruch 4, bei welchem das genannte stark absorbierende Polymer fähig ist, über das Hundertfache seines Gewichtes an Wasser zu absorbieren.

6. Artikel gemäß Anspruch 4 oder 5, bei welchem das genannte stark absorbierende Polymer ein Natriumsalz der retikulären Polyacrylsäure mit einer Korngröße zwischen 100 µm und 860 µm ist.

7. Artikel gemäß einem der vorherigen Ansprüche, bei welchem sich die genannte innere Hülle aus Fliesspapier mit einem Gewicht zwischen 40 g/m² und 120 g/m² zusammensetzt.

8. Artikel gemäß Anspruch 7, bei welchem das genannte Fliesspapier heißsiegelfähig ist.

9. Artikel gemäß Anspruch 7 oder 8, bei welchem das genannte Fliesspapier eine Restfeuchtigkeit zwischen 1 % und 20 % des Gewichtes, eine Dicke zwischen 90 µm und 170 µm und eine Zugfestigkeit im trockenen Zustand zwischen 0,3 kN/m und 1,5 kN/m aufweist.

10. Artikel gemäß Anspruch 9, bei welchem das genannte Fliesspapier eine Restfeuchtigkeit nicht höher als 7 % des Gewichtes aufweist.

11. Artikel gemäß einem der Ansprüche 7 bis 10, bei welchem das genannte Fliesspapier aus Papier erhalten wird, welches zu Brei gemacht und zu Bögen geformt wird.

12. Artikel gemäß einem der Ansprüche 1 bis 6, bei welchem sich die genannte innere Hülle aus einem heißsiegelfähigen und wasserlöslichen Material zusammensetzt.

13. Artikel gemäß einem der vorherigen Ansprüche, bei welchem die genannten Zellen geschlossene Zellen sind.

14. Artikel gemäß dem Anspruch 13, bei welchem sich die genannte innere Hülle aus zwei Bögen des genannten Materials zusammensetzt, welche im Grunde keine Festigkeit im feuchten Zustand besitzen, und welche heißversiegelt sind, um viele Zellen aufzuweisen, von welchen jede zwischen den zwei genannten Bögen erhalten wird.

15. Artikel gemäß Anspruch 14, bei welchem die genannte innere Hülle zwischen 250 Zellen pro m² und 1000 Zellen pro m² aufweist.

16. Artikel gemäß Anspruch 15, bei welchem die genannte innere Hülle zwischen 300 Zellen pro m² und 500 Zellen pro m² aufweist.

17. Artikel gemäß einem der vorherigen Ansprüche, welcher die Form eines rechteckigen Kissens aufweist, welches aus zwei Stoffbögen erhalten wird, welche die äußere Hülle bilden, und welche entlang der Seitenränder miteinander verbunden sind.

18. Artikel gemäß Anspruch 17, bei welchem das Polymer in Mengen zwischen 0,2 kg/m² und 2 kg/m² vorhanden ist.

19. Artikel gemäß Anspruch 18, bei welchem das Polymer in Mengen zwischen 0,3 kg/m² und 0,7 kg/m² vorhanden ist.

20. Artikel gemäß einem der Ansprüche 17 bis 19, bei welchem das Volumen, welches in der äußeren Hülle aufgenommen werden kann, zwischen 30 l/m² der Seitenoberfläche und 150 l/m² der Seitenoberfläche, vorzugsweise höher als 40 l/m² der Seitenoberfläche liegt.

## Revendications

1. Produit absorbant comprenant un emballage externe perméable à l'eau, ce produit étant **caractérisé par le fait que** ledit emballage externe contient un emballage interne comprenant au moins une matière capable de se désintégrer, de se dissoudre ou en tout état de cause de se rompre facilement lorsqu'il est en contact avec l'eau, un tel emballage interne comprenant deux feuilles réunies entre elles de manière à former des alvéoles maintenant un polymère superabsorbant en granules.

2. Produit selon la revendication 1, dans lequel l'emballage externe est fabriqué à l'aide d'une étoffe non tissée présentant un poids entre 20 et 100 g/m².

3. Produit selon la revendication 2, dans lequel ladite matière est du polypropylène.

4. Produit selon l'une quelconque des revendications précédentes dans lequel ledit polymère superabsorbant est susceptible d'absorber plus de 10 fois son poids d'eau.

5. Produit selon la revendication 4 dans lequel ledit polymère superabsorbant est susceptible d'absorber plus de 100 fois son poids d'eau.

6. Produit selon la revendication 4 ou 5, dans lequel ledit polymère superabsorbant est un sel de sodium d'acide polyacrylique réticulaire, ayant une granulométrie entre 100 et 860 µm.

7. Produit selon l'une quelconque des revendications précédentes, dans lequel ledit emballage interne est composé de papier buvard ayant un poids entre 40 et 120 g/m².

8. Produit selon la revendication 7 dans lequel ledit papier buvard est thermosoudable.

9. Produit selon la revendication 7 ou 8 dans lequel ledit papier buvard présente une humidité résiduelle entre 1 et 20% en poids, une épaisseur entre 90 et 170 µm, et une résistance à la traction lorsqu'il est sec entre 0,3 et 1,5 kN/m.

10. Produit selon la revendication 1, dans lequel ledit papier buvard présente une humidité résiduelle qui n'est pas supérieure à 7% en poids.

11. Produit selon l'une quelconque des revendications de 7 à 10, dans lequel ledit papier buvard est obtenu à partir de papier réduit en pâte et étendu en feuilles.

12. Produit selon l'une quelconque des revendications de 1 à 6 dans lequel ledit emballage interne est composé d'une matière thermosoudable et soluble dans l'eau.

13. Produit selon l'une quelconque des revendications précédentes, dans lequel lesdites alvéoles sont des alvéoles fermées.

14. Produit selon la revendication 13, dans lequel ledit emballage interne est composé de deux feuilles de ladite matière, ne présentant fondamentalement aucune résistance si elle est mouillée, thermosoudée de manière à présenter de nombreuses alvéoles, chacune d'elles étant obtenue entre lesdites deux feuilles.

15. Produit selon la revendication 14, dans lequel ledit emballage interne présente entre 250 et 1000 alvéoles par m².

16. Produit selon la revendication 15, dans lequel ledit emballage interne présente entre 300 et 500 alvéoles par m².

17. Produit selon l'une quelconque des revendications précédentes, présentant la forme d'un oreiller rectangulaire obtenu à l'aide de deux feuilles de matière composant l'emballage externe réunies entre elles le long des bords.

18. Produit selon la revendication 17, dans lequel le polymère est présent dans des quantités entre 0,2 et 2kg/m².

19. Produit selon la revendication 18, dans lequel le polymère est présent dans des quantités entre 0,3 et 0, 7 kg/m².

20. Produit selon l'une quelconque des revendications 17 à 19, dans lequel le volume disponible pour l'emballage externe est entre 30 et 150 l/m² de surface latérale, de préférence supérieure à 40 l/m².
